# EUROPÄISCHE PATENTSCHRIFT

(11) **EP 2 953 837 B1**
(45) Veröffentlichungstag und Bekanntmachung des Hinweises auf die Patenterteilung: **17.05.2017**
(21) Anmeldenummer: 14702531.6
(22) Anmeldetag: 29.01.2014
(51) Int. Cl.: B62D 7/15

(54) **LENKSYSTEM FÜR EIN FAHRZEUG SOWIE MEHRWEGETRANSPORTFAHRZEUG**
STEERING SYSTEM FOR A VEHICLE, AND MULTIDIRECTIONAL TRANSPORT VEHICLE
SYSTÈME DE DIRECTION POUR VÉHICULE AINSI QUE VÉHICULE DE TRANSPORT À VOIES MULTIPLES

(30) Priorität: 05.02.2013 DE 102013101115
(43) Veröffentlichungstag der Anmeldung: 16.12.2015
(73) Patentinhaber: Hubtex Maschinenbau GmbH & Co. Kg, 36041 Fulda (DE)
(72) Erfinder: OTTERBEIN, Achim, 36137 Großenlüder (DE)
(74) Vertreter: Kluin, Jörg-Eden
(86) Internationale Anmeldenummer: PCT/EP2014/051699
(87) Internationale Veröffentlichungsnummer: WO 2014/122054

(56) Entgegenhaltungen:
- EP-A2- 1 657 140
- EP-A2- 2 253 528
- WO-A1-03/059720
- WO-A1-2008/141836

## Beschreibung

Die Erfindung betrifft ein Lenksystem für ein Fahrzeug mit mindestens drei lenkbaren Rädern und einem die Räder mittels eines Lenkprogramms lenkenden Lenksollwertgebers, wobei ein Lenkpol, auf welchem die Achsen der Räder bei einer Kurvenfahrt ausgerichtet sind, durch Betätigung des Lenksollwertgebers entlang einer Lenkpolachse verlagert wird. Die Erfindung schließt auch ein Mehrwegetransportfahrzeug mit einem derartigen Lenksystem ein.

Ein Mehrwegetransportfahrzeug mit einem derartigen Lenksystem ist beispielsweise aus der WO 01/70556 A1 bekannt. Bei diesem Fahrzeug kann dieses Lenkprogramm, auch "Allradlenkung" genannt, während der Fahrt auf ein zweites Lenkprogramm zur gleichsinnigen Verdrehung der Lenkpolachse aller Räder durch Betätigung des Lenksollwertgebers, auch "Diagonallenkung" genannt, gewechselt werden. Bei Betätigung des Lenksollwertgebers werden die gelenkten Räder bei der Allradlenkung so betätigt, dass sich ihre Drehachsen stets in dem Lenkpol schneiden. Hingegen werden bei der Diagonallenkung die Räder in Abhängigkeit der Betätigung des Lenksollwertgebers so gelenkt, dass die Drehachsen der Räder parallel verlaufen, mit anderen Worten: dass der Lenkpol im Unendlichen liegt. Bei einer Betätigung des Lenksollwertgebers bei gewählter Diagonallenkung führt das Fahrzeug einen Richtungswechsel durch, ohne jedoch hierbei seine Ausrichtung zu verändern, wohingegen bei gewählter Allradlenkung die Ausrichtung des Fahrzeugs der Fahrtrichtungsänderung folgt.

Um im Bedarfsfalle die Ausrichtung des Fahrzeugs relativ zu seiner Fahrtrichtung unabhängig von dem gerade gewählten Lenkprogramm ändern zu können, ist bei diesem Fahrzeug ein weiteres Steuerorgan vorgesehen, welches im Bedarfsfalle zeitgleich mit dem Lenksollwertgeber betätigt werden kann. Die Betätigung dieses zweiten Steuerorgans führt zur Korrektur der Lenkwinkel der Räder zumindest einer Achse in einer nicht dem gewählten Lenkprogramm entsprechenden Weise, und zwar etwa proportional zur Auslenkung dieses Steuerorgans, das als Joystick ausgebildet ist.

Ein anderes Lenksystem für ein Mehrwegetransportfahrzeug ist aus der EP 1 657 140 A2 bekannt. Bei diesem Lenksystem sind zusätzlich zum Lenksollwertgeber, der stets nach dem Lenkprogramm "Allradlenkung" arbeitet, zwei weitere Bedienelemente vorgesehen: Ein erstes Bedienelement zur kontinuierlichen Verschiebung der Lenklinie und ein zweites Bedienelement zur kontinuierlichen Steuerung der Hauptrichtung des Fahrzeugs. Durch diese Maßnahme soll eine intuitive Lenkung geschaffen werden, die vollständig auf fest definierte Lenkprogramme verzichtet, um so eine höhere Flexibilität des Lenksystems zu erreichen.

Nachteilig an dem vorzitierten Stand der Technik ist, dass wegen der Notwendigkeit im Fahrbetrieb zumindest zwei proportional arbeitende Bedienelemente (im Falle der WO 01/70556 A1 der Lenksollwertgeber und das Steuerorgan, im Falle der EP 1 657 149 B1 der Lenksollwertgeber und die beiden zusätzlichen Bedienelemente) für den Fahrer viele Eingabefreiheitsgrade bestehen und das Lenken eines derartigen Fahrzeugs eine ganz erhebliche Übung und auch im täglichen Betrieb eine erhebliche Konzentration erfordert, wenn unerwünschte, teilweise schwer beherrschbare Fahrsituationen vermieden werden sollen.

Die EP 2 253 528 A2 wird als nächstliegender Stand der Technik gesehen und offenbart ein Verfahren zum dynamischen Lenkprogrammwechsel. Der Fahrer kann während der Fahrt von einem Längsprogramm in ein Querprogramm umschalten und die Drehung der Lenklinie in eine vorgegebene, neue Lage bewirken.

Der Erfindung liegt daher die Aufgabe zugrunde, ein Lenksystem zu schaffen, welches eine ausreichende Flexibilität des Lenkens eines Mehrwegetransportfahrzeugs sicherstellt, jedoch für einen Fahrer einfacher betätigbar ist.

Diese Aufgabe wird durch das in Anspruch 1 wiedergegebene Lenksystem gelöst.

Bei diesem Lenksystem, welches - wie eingangs erwähnt - zumindest das Lenkprogramm "Allradlenkung" umfasst, ist erfindungsgemäß ein wahlweise aktivierbares Bedienelement vorgesehen, dessen Aktivierung die Auslösung einer der folgenden Funktionen bewirkt:
- Eine Betätigung des Lenksollwertgebers führt zu einer Drehung der Lenkpolachse um einen Lenkpolachsendrehpol. Ausgehend vom Lenkzustand, in welchem sich das Fahrzeug im Moment des Aktivierens des Bedienelements befindet, führt eine Betätigung des einzigen Lenksollwertgebers zu einer Beeinflussung der Lenkwinkel der gelenkten Räder im Sinne des Lenkprogramms Diagonallenkung. Für die Dauer der Aktivierung des Bedienelements verändert sich der Abstand des Lenkpols vom Lenkpolachsendrehpol bei Betätigung des einzigen Lenksollwertgebers nicht. Nach Beendigung der Aktivierung des Bedienelements verbleibt die Lenkpolachse in der erreichten Winkellage. Eine erneute Betätigung des Lenksollwertgebers führt zu einer Verlagerung des Lenkpols auf dieser Lenkpolachse.
- Die Lenkpolachse wird bei Aktivierung des Bedienelements in einem vorgegebenen Drehsinn um den Lenkpolachsendrehpol um einen vorgegebenen Winkel gedreht. Die Drehung erfolgt vorzugsweise mit konstanter Winkelgeschwindigkeit. Eine Betätigung des Lenksollwertgebers führt wiederum zu einer Verlagerung entlang der Lenkpolachse in ihrer jeweils momentanen Winkelposition. Vorzugsweise ist das wahlweise aktivierbare Bedienelement wiederum derart ausgestaltet, dass die Drehung um den Lenkpolachsendrehpol entweder in dem einen, oder in dem anderen Drehsinn erfolgt. Oder es sind wiederum zwei verschiedene wahlweise aktivierbare Bedienelemente vorgesehen, wobei eines die Drehung in dem einen, das andere die Drehung in dem anderen Drehsinn bewirkt.

Die Erfindung ist bereits durch ein Lenksystem verwirklicht, welches ein einziges wahlweise aktivierbares Bedienelement umfasst, dessen Aktivierung der Auslösung einer einzigen der vorgenannten Funktionen bewirkt. Insbesondere betrifft die Erfindung jedoch ein Lenksystem, bei welchem das wahlweise aktivierbare Bedienelement auf mehrere, besonders bevorzugt sämtliche der vorbeschriebenen Funktionen umschaltbar ist, oder bei welchem mehrere, separate Bedienelemente vorgesehen sind, die jeweils der Aktivierung einer der vorbeschriebenen Funktionen zugeordnet sind, wobei insbesondere ein Bedienelement für jede der vorbeschriebenen Funktionen vorgesehen ist.

Darüber hinaus kann die Aktivierung des wahlweise aktivierbaren Bedienelements die Auslösung einer oder mehrerer der folgenden Funktionen bewirken:
- Die Lenkpolachse wird in einem vorgegebenen Drehsinn um den Lenkpolachsendrehpol für die Dauer der Aktivierung gedreht, vorzugsweise mit konstanter Winkelgeschwindigkeit. Die gleichzeitige Betätigung des Lenksollwertgebers führt dann zu einer Verschiebung des Lenkpols auf der Lenkpolachse. Nach Deaktivierung des Bedienelements verbleibt die Lenkpolachse in der eingenommenen Winkellage. Vorzugsweise ist das wahlweise aktivierbare Bedienelement derart ausgestaltet, dass die Lenkpolachse wahlweise in dem einen oder dem anderen Drehsinn gedreht werden kann. Oder es sind zwei Bedienelemente vorgesehen, eines zur Drehung der Lenkpolachse in dem einen, das andere zur Drehung der Lenkpolachse in dem anderen Drehsinn.
- Die Lenkpolachse wird bei Aktivierung des Bedienelements in einem vorgegebenen Drehsinn um den Lenkpolachsendrehpol in eine vorgegebene Winkelposition gedreht. Die Drehgeschwindigkeit um den Lenkpolachsendrehpol ist wiederum vorzugsweise konstant. Es wird also durch Betätigung des wahlweise aktivierbaren Bedienelements ein bestimmter Lenkzustand erzeugt, unabhängig von der Ausgangssituation, in dem sich das Fahrzeug im Moment der Aktivierung des Bedienelements befindet. Das Bedienelement ist wiederum vorzugsweise derart ausgestaltet, dass der Drehsinn, um den die Lenkpolachse um den Lenkpolachsendrehpol bei Aktivierung gedreht wird, vorbestimmbar ist. Oder es sind zwei separate Bedienelemente vorgesehen, wobei die Aktivierung des einen eine Drehung im, die Aktivierung des anderen entgegen dem Uhrzeigersinn bewirkt. Auch sind vorzugsweise Mittel vorgesehen, mittels welchen die vorgegebene Winkelposition, in welche die Lenkpolachse beim Aktivieren des Bedienelements gedreht wird, vorwählbar ist.

Ein wahlweise aktivierbares Bedienelement ist vorzugsweise als Ein/Aus-Schaltelement zur Aktivierung/Deaktivierung für eine der vorgesehenen Funktionen ausgebildet. Es ist vorzugsweise also für jede der vorgesehenen Funktionen ein separates Ein/Aus-Schaltelement vorhanden. Alternativ ist es möglich, Mittel vorzusehen, mit welchen ein oder mehrere der Ein/Aus-Schaltelemente unterschiedlichen Funktionen zugeordnet werden können.

Das Ein/Aus-Schaltelement ist vorzugsweise in seiner Aus-Stellung selbst rückstellend ausgebildet. Eine manuelle Rückstellung zur Beendigung der Ausführung der aktivierten Funktion bzw. zur erneuten Aktivierung der Funktion ist somit nicht notwendig.

Das Schaltelement kann insbesondere ein Tast-, Zug-, Kipp-, Wipp- und/oder Drehelement sein. Es können also auch Schaltelemente Verwendung finden, die beispielsweise dreh- und tastbar sind, beispielsweise um durch Drehung den Drehsinn, um den die Lenkpolachse um den Lenkpolachsendrehpol bei Aktivierung der entsprechenden Funktion, die durch Tastbetätigung desselben Elements erfolgt, festzulegen.

Der Lenksollwertgeber kann in beliebiger Weise ausgestaltet sein, die eine Verschiebung des Lenkpols auf der Lenkpolachse als Funktion der Auslenkung des Lenksollwertgebers aus seiner Mittelstellung gestattet. Bevorzugt umfasst der Lenksollwertgeber hierzu einen Joystick, besonders bevorzugt ein Lenkrad.

Die Erfindung umfasst auch ein Mehrwegetransportfahrzeug mit einem erfindungsgemäßen Lenksystem, insbesondere einen Mehrwegestapler.

Weitere mögliche Ausgestaltungen der Erfindung sollen im Folgenden beispielhaft unter Bezugnahme auf die beigefügten Zeichnungen beschrieben werden. Es zeigen:
- Fig. 1: - schematisch - ein Mehrwegetransportfahrzeug am Beispiel eines Mehrwegestaplers in einer Ansicht von oben;
- Fig. 2: eine Prinzipdarstellung eines ein erfindungsgemäßes Lenksystem aufweisenden Steuersystems eines derartigen Mehrwegetransportfahrzeugs sowie
- Fig. 3a bis 9c: schematische Darstellungen verschiedener Lenksituationen, anhand welcher unterschiedliche Lenkmöglichkeiten des erfindungsgemäßen Lenksystems erläutert werden sollen.

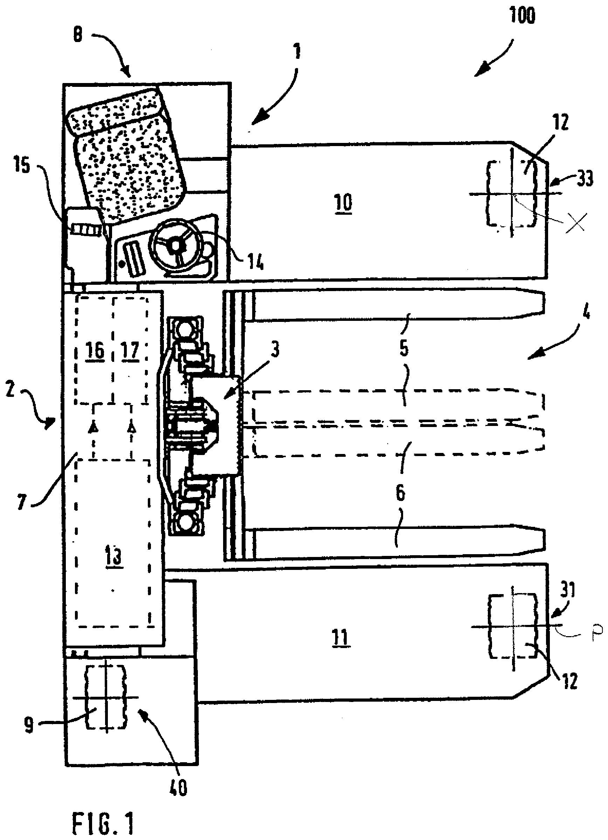

Das in Fig. 1 als Ganzes mit 100 bezeichnete Mehrwegetransportfahrzeug umfasst ein in Aufsicht etwa U-förmiges Fahrgestell 1. Es trägt auf dem Querbalken 2 des U einen aufrecht stehenden Mast 3, an dem heb- und senkbar eine Gabelanordnung 4 angeordnet ist. Letztere ist derart ausgestaltet, dass ihre Zinken 5, 6 zwischen einer entfernten, in Fig. 1 durchgezogenen Position und einer benachbarten, in Fig. 1 gestrichelt dargestellten Position verlagerbar sind, um so ihren Abstand an die jeweils zu transportierenden Waren anpassen zu können.

Auf dem Querbalken 2 des U ist ferner ein Gehäuse 7 angeordnet, das einen Großteil der zum Betrieb des Mehrwegetransportfahrzeugs 100 benötigten Aggregate und Einrichtungen sowie eine Batterieanordnung 13 aufnimmt.

Gemäß Fig. 1 unten und oben an dem Querbalken 2 - letztere durch die Darstellung eines Steuerstandes 8 verdeckt - ist jeweils ein Rad 9 angedeutet, welches durch einen in der Zeichnung nicht dargestellten Motor angetrieben ist. An den gemäß Fig. 1 sich von dem Querbalken 2 nach rechts erstreckenden Segmenten 10, 11 des Fahrgestells 1 sind jeweils im Endbereich Räder 12 vorgesehen. Sämtliche Räder 9, 12 sind um Radachsen P drehbar und jeweils um eine senkrecht zur Zeichenebene verlaufende Lenkachse X lenkbar angeordnet.

Der in Fig. 1 am oberen Ende des Querbalkens 2 dargestellte Steuerstand 8 enthält die zum Betrieb des Mehrwegestaplers 100 von einer Bedienperson zu betätigenden Bedienungseinrichtungen, zu denen ein Lenkrad 14 und eine Tipptasteranordnung 15 mit einer Mehrzahl von Tipptastern zählt, deren Funktion weiter unten beschrieben wird.

Ferner umfasst der Steuerstand eine nicht näher dargestellte Einrichtung - beispielsweise ein "Gaspedal" -, die den Sollwert für die Antriebsleistung der in der Zeichnung nicht dargestellten Fahrmotoren vorgibt, die von Steuereinheiten 16, 17 bereitgestellt wird.

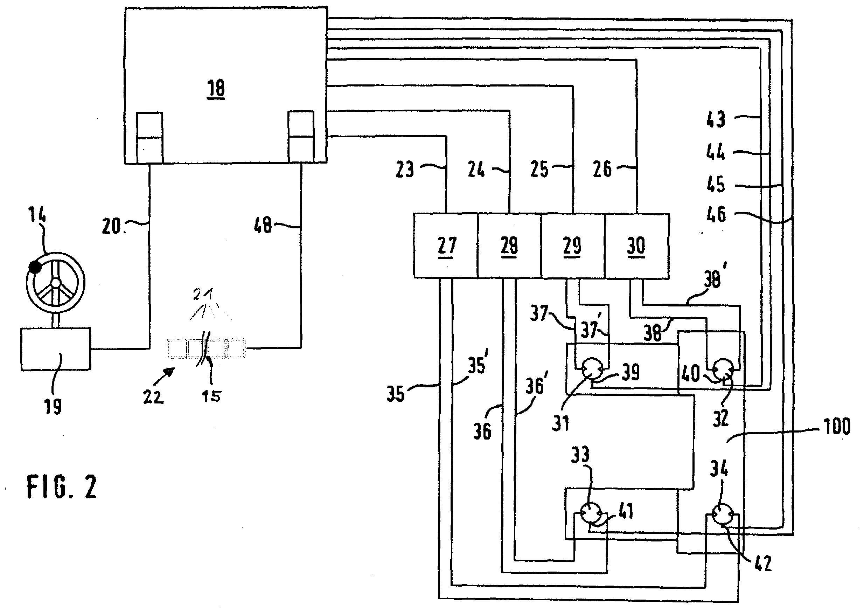

Wie Fig. 2 verdeutlicht, ist das Lenkrad 14 mit einem Lenksollwertgeber 19 verbunden, der die Position des Lenkrades 14 in korrelierte elektrische Signale umwandelt. Letztere werden über eine elektrische Leitung 20 dem zentralen Steuersystem 18 zugeführt. Dieses wandelt die von dem Lenksollwertgeber 19 empfangenen Daten in Signale um, die über Leitungen 23, 24, 25, 26 hydraulischen Ventilen 27, 28, 29, 30 zwecks Betätigung der Lenkeinrichtungen 31, 32, 33, 34 der Räder des Mehrwegetransportfahrzeugs zugeführt werden.

Jede der Lenkeinrichtungen 31, 32, 33, 34 umfasst einen Hydromotor, der über zwei Hydraulikleitungen 35, 35'; 36, 36'; 37, 37'; 38, 38' mit den hydraulischen Ventilen 27, 28, 29, 30 verbunden ist, und je nach von dem Steuersystem vorgegebenem Solllenkwinkel mit Hydraulikflüssigkeit beaufschlagt wird.

Jede der im übrigen in herkömmlicher Weise ausgestalteten Lenkeinrichtungen 31, 32, 33, 34 umfasst Lenkwinkelsensoren 39, 40, 41, 42, die über elektrische Leitungen 43, 44, 45, 46 ein mit dem jeweiligen Ist-Lenkwinkel korreliertes elektrisches Signal dem Steuerbefehl 18 zur Verfügung stellen, so dass eine Regelung der Lenkeinrichtungen 31, 32, 33, 34 im engeren Sinne erfolgt.

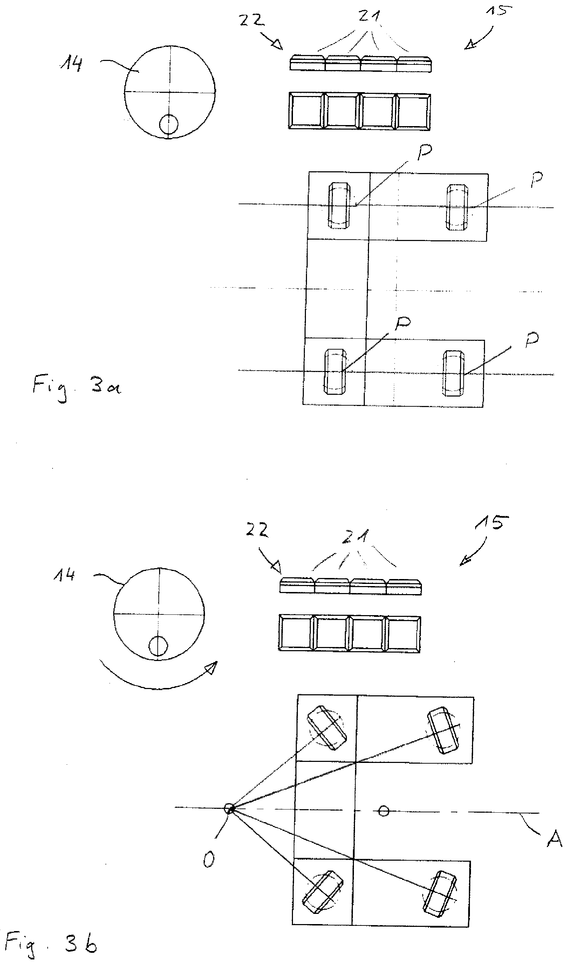

Bei dem dargestellten Ausführungsbeispiel bilden die einzelnen Tipptasten 21 der Tipptasteranordnung 15 jeweils ein wahlweise aktivierbares Bedienelement 22, dessen Aktivierung die Auslösung einer der folgenden, anhand der Fig. 3a bis 9c schematisch dargestellten Funktionen bewirkt. Die Tipptasteranordnung 15 ist hierzu über eine Signalleitung 48 mit dem Steuersystem 18 verbunden.

In Fig. 3a ist die Ausgangs-Lenksituation des hier dargestellten Ausführungsbeispiels des Mehrwegetransportfahrzeugs dargestellt. Das Lenkrad 14 befindet sich in seiner Neutralstellung. Keines der wahlweise aktivierbaren Bedienelemente 22 ist aktiviert. Die Radachsen P verlaufen parallel zueinander bzw. sind deckungsgleich. Das Lenksystem befindet sich bei dem hier dargestellten Ausführungsbeispiel in dieser Ausgangssituation im Lenkprogramm "Allradlenkung". Wird nun das Lenkrad 14 entgegen dem Uhrzeigersinn, d.h. nach links gedreht, so werden die gelenkten Räder so gelenkt, dass sich ihre Radachsen P in dem gemeinsamen Lenkpol O schneiden auf der Lenkpolachse A. Bei Betätigung des Lenkrades 14 wird der Lenkpol O auf einer Lenkpolachse A verlagert, und zwar bei einer Drehbetätigung des Lenkrades gegen den Uhrzeigersinn nach links, bei einer Drehbetätigung im Uhrzeigersinn dementsprechend nach rechts.

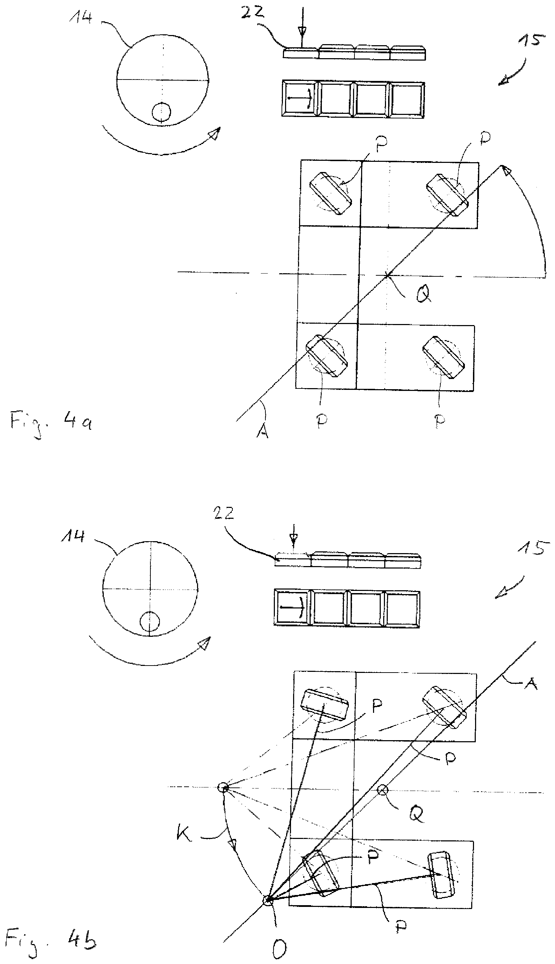

Anhand von Fig. 4a und b soll nun die Funktionalität erläutert werden, die bei dem dargestellten Ausführungsbeispiel des erfindungsgemäßen Lenksystems bewirkt wird, wenn der in der Zeichnung linke Taster 21 der Tipptasteranordnung 15 gedrückt und damit das Bedienelement 22 in seinen aktivierten Zustand überführt wird.

Durch Druck des linken Tipptasters der Tipptasteranordnung 15 wird das Steuersystem 18 derart beeinflusst, dass eine Drehbetätigung des Lenkrades 14 zu einer Drehung der Lenkpolachse A in demselben Drehsinn führt. In Fig. 4a sind die Verhältnisse dargestellt, wenn die Aktivierung des Bedienelements in der in Fig. 3a dargestellten Geradeausstellung der Räder erfolgt und das Lenkrad 14 nach der Aktivierung dieses Bedienelements entgegen dem Uhrzeigersinn, d.h. nach links eingeschlagen wird. Die Lenkpolachse A wird in demselben Drehsinn um einen Lenkpolachsendrehpol Q gedreht, die Radachsen P verlaufen weiterhin parallel zueinander, so dass das Mehrwegetransportfahrzeug in eine Diagonalfahrt übergeht, ohne dass sich seine Ausrichtung ändert. Wird das Lenkrad im Uhrzeigersinn, d.h. nach rechts gedreht, so erfolgt die Drehung der Lenkpolachse A um den Lenkpolachsendrehpol Q dementsprechend auch im Uhrzeigersinn.

In Fig. 4b ist eine Situation dargestellt, in welcher der linke Taster der Tastenanordnung 15 betätigt wurde, bei welcher sich das Mehrwegetransportfahrzeug in der in Fig. 3b dargestellten Kurvenfahrt befand. Aus dieser Ausgangssituation, in Fig. 4b gestrichelt dargestellt, wird die Lenkpolachse A wiederum entgegen dem Uhrzeigersinn gedreht, der Lenkpol O verlagert sich auf einem Kreisbogen K. Solange das Bedienelement 22 aktiviert ist, d.h. solange die linke Taste der Tasteranordnung 15 gedrückt verbleibt, führt eine Drehbetätigung des Lenkrades 14 lediglich zu einer Drehung der Lenkpolachse A um den Lenkpolachsendrehpol Q, nicht jedoch zu einer Verlagerung des Lenkpols O entlang der Lenkpolachse A. Nach Freigabe des Tasters und damit Deaktivierung dieses Bedienelements verbleibt hingegen die Winkelposition der Lenkpolachse A konstant, und eine Drehbetätigung des Lenkrades 14 führt zu einer Verlagerung des Lenkpols entlang dieser Lenkpolachse.

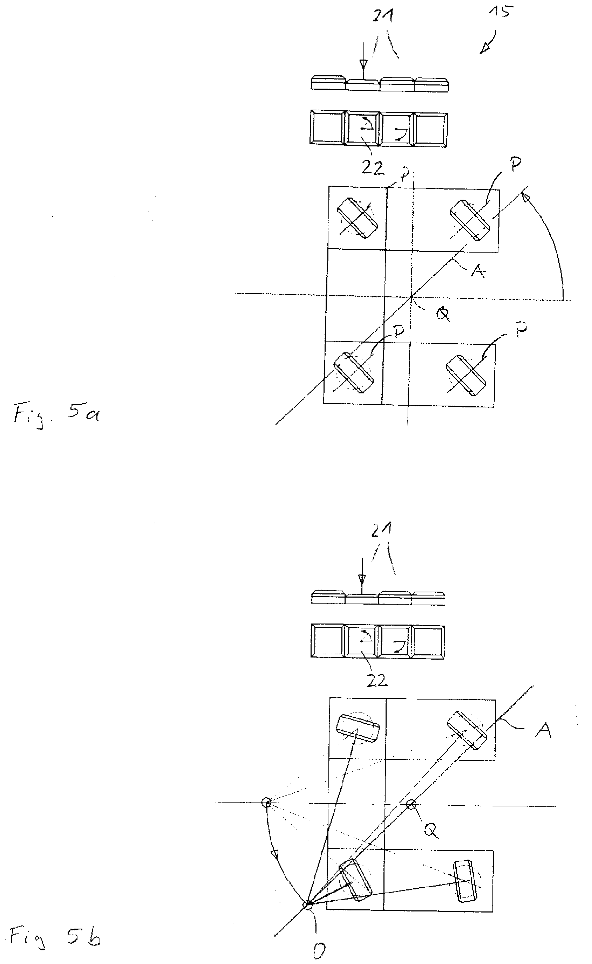

Bei dem in Fig. 5a) und 5b) dargestellten Ausführungsbeispiel umfasst das erfindungsgemäße Lenksystem eine Tasteranordnung 15 mit zwei Tasten 21, die jeweils ein wahlweise aktivierbares Bedienelement 22 bilden. Durch Betätigung einer dieser Tasten 21 wird die Funktion bewirkt, dass die Lenkpolachse A in dem durch die jeweilige Taste vorgegebenen Drehsinn um den Lenkpolachsendrehpol Q für die Dauer der Aktivierung gedreht wird. Fig. 5a zeigt die Verhältnisse ausgehend von der in Fig. 3a dargestellten Geradeausfahrt, Fig. 5b die Verhältnisse ausgehend von der in Fig. 3b dargestellten Kurvenfahrt. Eine zeitgleiche Betätigung des in den Fig. 5a und 5b nicht dargestellten Lenkrades würde ausgehend von der in Fig. 5a dargestellten Lenksituation dazuführen, dass die Räder in dem entsprechenden Drehsinn derart gelenkt würden, dass sich ihre Radachsen P in einem auf der Lenkpolachse liegenden Lenkpol schneiden. Ausgehend von der Lenksituation gemäß Fig. 5b würde eine Drehbetätigung des Lenkrades dazu führen, dass sich der Lenkpol O auf der Lenkpolachse A verlagert. Eine derartige Verlagerung ist sowohl während der Drehung der Lenkpolachse um den Lenkpolachsendrehpol, d. h. während der Aktivierung des entsprechenden Bedienelements 22 möglich, als auch nach dessen Deaktivierung, d. h. wenn sich die Winkellage der Lenkpolachse um den Lenkpolachsendrehpol nicht mehr ändert.

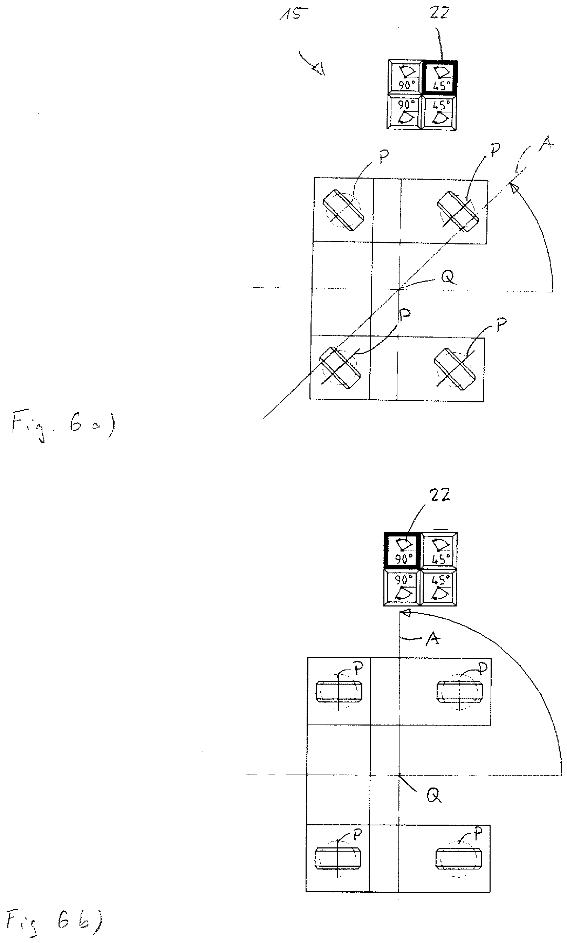

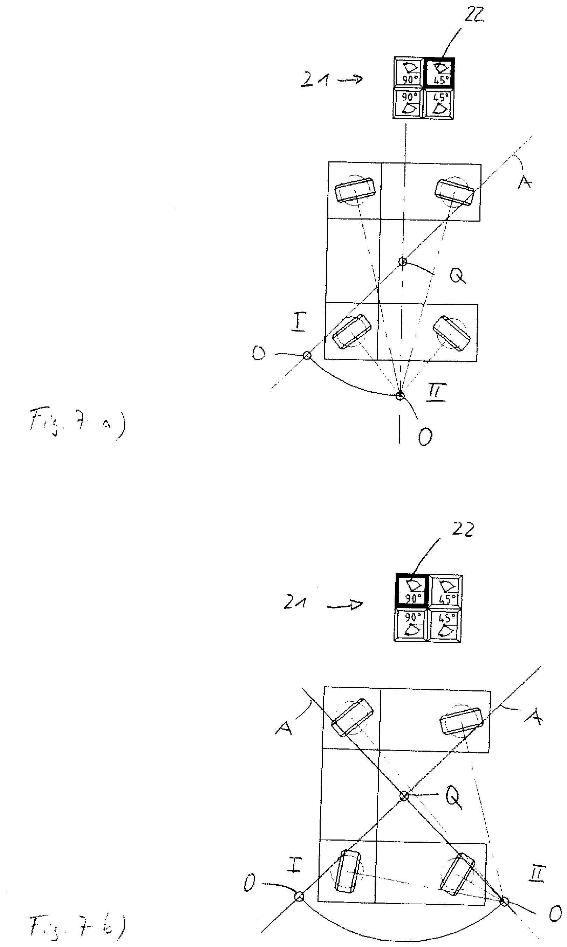

Ein Ausführungsbeispiel mit einer anderen Funktionalität wahlweise aktivierbarer Bedienelemente 22 ist in Fig. 6a) bis Fig. 7b) dargestellt. Eine Aktivierung dieser Bedienelemente bewirkt, dass die Lenkpolachse A in einem vorgegebenen Drehsinn um den Lenkpolachsendrehpol Q um einen vorgegebenen Winkel gedreht wird. In Fig. 6a) ist die Lenksituation nach Betätigung einer 45° Drehung ausgehend von der in Fig. 3a) dargestellten Geradeausfahrt wiedergegeben. Fig. 6b) zeigt die Lenksituation nach Betätigung desjenigen Bedienelements 22, welches eine Drehung der Lenkpolachse A um den Lenkpolachsendrehpol Q um 90° entgegen dem Uhrzeigersinn bewirkt.

Fig. 7a) zeigt die Lenksituation, wenn das 45°-Betätigungselement 22 wie in Fig. 6a) in einer Kurvenfahrt, bei der sich der Lenkpol O in der Position I befindet, betätigt wird. Die Lenkpolachse A wird um den Lenkpolachsendrehpol Q um 45° gedreht, wobei sich der Lenkpol O in die Position II verlagert. Fig. 7b) zeigt die Lenksituation bei Betätigung des 90°-Bedienelements bei derselben Ausgangssituation. Wie im Falle der anhand von Fig. 5a und 5b beschriebenen Funktionalität führt eine zeitgleiche Drehbetätigung des in Fig. 6a bis 7b nicht dargestellten Lenkrades dazu, dass die Räder ausgehend von den in Fig. 6a) und 6b) dargestellten Lenksituationen so gelenkt werden, dass sich die Radachsen P in einem auf der Lenkpolachse liegenden Lenkpol schneiden, bei den in Fig. 7a) und 7b) dargestellten Lenksituationen dazu, dass sich der Lenkpol O entlang der momentanen Lenkpolachse A verlagert.

Die in den Fig. 6a) bis 7b) untere Reihe der Bedienelemente dient der Drehung der Lenkpolachse A um den Lenkpolachsendrehpol Q um denselben Winkelbetrag wie das jeweils darüber liegende Bedienelement 22, jedoch in umgekehrtem Drehsinn.

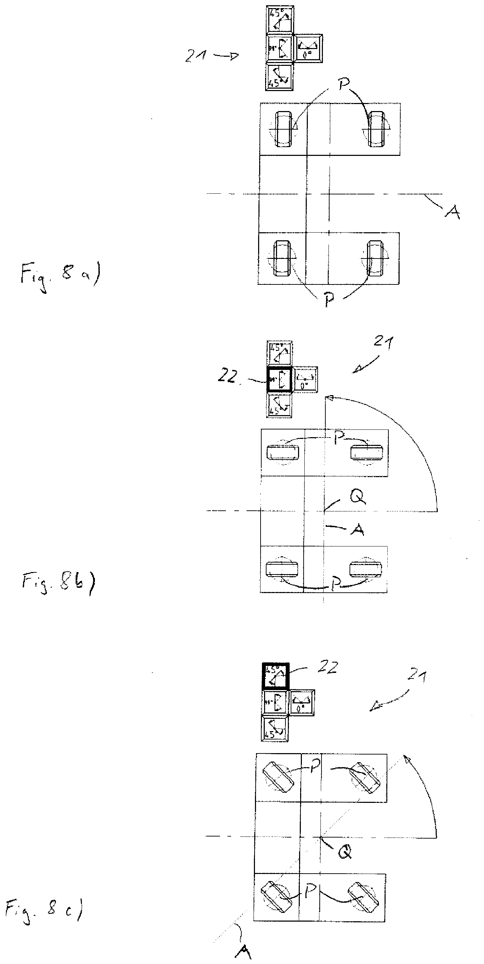

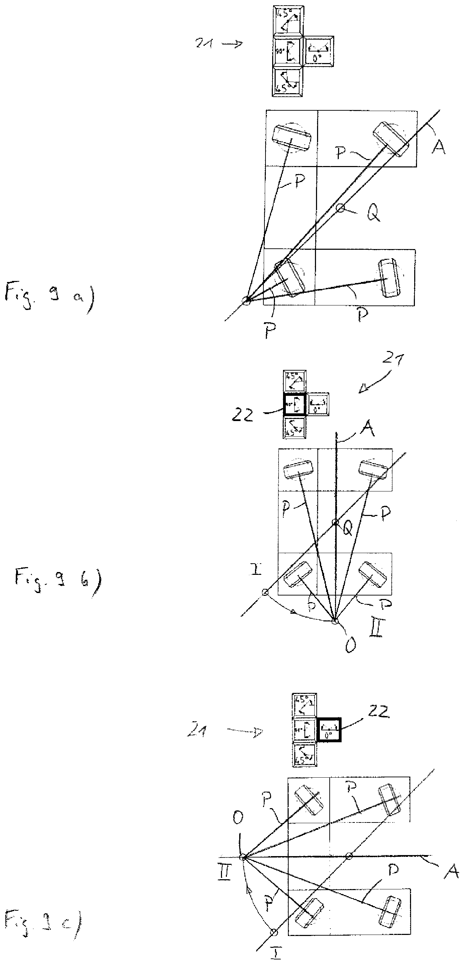

Ein weiteres Ausführungsbeispiel mit einer anderen Funktionalität der wahlweise aktivierbaren Bedienelemente 22 ist in den Figuren 8a) bis c), 9a) bis c) dargestellt. Durch Betätigung des jeweiligen wahlweise aktivierbaren Bedienelements 22 wird die Lenkpolachse aus einer beliebigen Ausgangsstellung in die jeweilige, auf dem Bedienelement angegebene Winkelposition verlagert, und zwar ohne dass sich die Lage des Lenkpols O auf der Lenkpolachse A verlagert. In Fig. 8a) bis c) sind Längs-, Quer- und 45° Schrägfahrt symbolisiert, d. h. die Endpositionen der Räder wenn die Aktivierung des entsprechenden Bedienelements 22 in einer Geradeausstellung des in diesen Figuren nicht dargestellten Lenkrads erfolgt. In Fig. 9a) bis c) sind die Lenksituationen dargestellt, wenn die Aktivierung des jeweiligen, in der Zeichnung fett dargestellten Bedienelements erfolgt, wenn sich das Fahrzeug in einer Kurvefahrt, symbolisiert in Fig. 9a, befindet. Dabei sind die Ausgangspositionen, in der sich der Lenkpol vor der Aktivierung des Betätigungselements befindet, mit I, die Endpositionen nach Aktivierung des Betätigungselements mit II bezeichnet.

### Bezugszeichenliste:

- 100: Mehrwegetransportfahrzeug
- 1: Fahrgestell
- 2: Querbalken
- 3: Mast
- 4: Gabelanordnung
- 5: Zinken
- 6: Zinken
- 7: Gehäuse
- 8: Steuerstand
- 9: Räder
- 10: Segment
- 11: Segment
- 12: Räder
- 13: Batterieanordnung
- 14: Lenkrad
- 15: Tipptasteranordnung
- 16: Steuereinheit
- 17: Steuereinheit
- 18: zentrales Steuersystem
- 19: Lenksollwertgeber
- 20: Leitung
- 21: Tipptasten
- 22: Bedienelement
- 23: Leitung
- 24: Leitung
- 25: Leitung
- 26: Leitung
- 27: hydraulisches Ventil
- 28: hydraulisches Ventil
- 29: hydraulisches Ventil
- 30: hydraulisches Ventil
- 31: Lenkeinrichtung
- 32: Lenkeinrichtung
- 33: Lenkeinrichtung
- 35, 35': Hydraulikleitung
- 36, 36': Hydraulikleitung
- 37, 37': Hydraulikleitung
- 38, 38': Hydraulikleitung
- 39: Lenkwinkelsensor
- 40: Lenkwinkelsensor
- 41: Lenkwinkelsensor
- 42: Lenkwinkelsensor
- 43: Leitung
- 44: Leitung
- 45: Leitung
- 46: Leitung
- 48: Leitung
- A: Lenkpolachse
- K: Kreisbogen
- O: Lenkpol
- P: Radachse
- Q: Lenkpolachsendrehpol
- X: Lenkachsen

## Patentansprüche

1. Lenksystem für ein Fahrzeug mit mindestens drei lenkbaren Rädern (9, 12) und einem die Räder (9, 12) mittels eines Lenkprogramms lenkenden Lenksollwertgeber (19), wobei ein Lenkpol (O), auf welchen die Achsen (P) der Räder (9, 12) bei einer Kurvenfahrt ausgerichtet sind, durch Betätigung des Lenksollwertgebers (19) entlang einer Lenkpolachse (A) verlagert wird, **dadurch gekennzeichnet,**
**dass** ein wahlweise aktivierbares Bedienelement (22) vorgesehen ist, dessen Aktivierung die Auslösung einer der folgenden Funktionen bewirkt:
- eine Betätigung des Lenksollwertgebers (19) führt zu einer Drehung der Lenkpolachse (A) um einen Lenkpolachsendrehpol (Q);
- die Lenkpolachse (A) wird in einem vorgegebenen Drehsinn um den Lenkpolachsendrehpol (Q) um einen vorgegebenen Winkel ausgehend von einem beliebigen Anfangswinkel gedreht.

2. Lenksystem nach Anspruch 1, **dadurch gekennzeichnet, dass** das wahlweise aktivierbare Bedienelement (22) ein Ein/Ausschaltelement zur Aktivierung/Deaktivierung für eine der vorgesehenen Funktionen aufweist.

3. Lenksystem nach Anspruch 2, **dadurch gekennzeichnet, dass** das Schaltelement in die Aus-Stellung selbst rückstellend ausgebildet ist.

4. Lenksystem nach Anspruch 2 oder 3, **dadurch gekennzeichnet, dass** das Schaltelement ein Tast-, Zug-, Kipp-, Wipp- und/oder Drehelement umfasst.

5. Lenksystem nach einem der Ansprüche 1 bis 4, **dadurch gekennzeichnet, dass** der Lenksollwertgeber (19) ein Lenkrad (14) umfasst.

6. Mehrwegetransportfahrzeug (100), **dadurch gekennzeichnet, dass** es ein Lenksystem nach einem der Ansprüche 1 bis 5 umfasst.

## Claims

1. A steering system for a vehicle having at least three steerable wheels (9, 12) and a steering set point value controller (19) steering the wheels (9, 12) by means of a steering program, wherein a steering pole (O) on which the axes (P) of the wheels (9, 12) are oriented during cornering is displaced by actuation of the steering set point value controller (19) along a steering pole axis (A),
**characterized in that** a selectively activatable operating element (22) is provided, activation of which triggers one of the following functions:
• actuating the steering set point value controller (19) leads to rotation of the steering pole axis (A) about a steering pole axis rotary pole (Q),
• the steering pole axis (A) is rotated in a predetermined rotary direction about the steering pole axis rotary pole (Q) by a predetermined angle based on an arbitrary initial angle.

2. The steering system according to claim 1, **characterized in that** the selectively activatable operating element (22) has an on/off switching element for activating/deactivating one of the provided functions.

3. The steering system according to claim 2, **characterized in that** the switching element is designed so as to be self-resetting to the off-position.

4. The steering system according to claim 2 or 3, **characterized in that** the switching element comprises a push element, a pull element, a tilt element, a rocker element, and/or a rotary element.

5. The steering system according to any of claims 1 to 4, **characterized in that** the steering set point value controller (19) comprises a steering wheel (14).

6. A multidirectional transport vehicle (100), **characterized by** comprising the steering system according to any of claims 1 to 5.

## Revendications

1. Système de direction pour un véhicule ayant au moins trois roues dirigeables (9, 12) et un ajusteur de consigne de direction (19) dirigeant les roues (9, 12) au moyen d'un programme de direction, dans lequel un pôle de direction (O), sur lequel les axes (P) des roues (9, 12) sont orientés lors de la négociation d'un virage, est déplacé le long d'un axe (A) du pôle de direction par commande de l'ajusteur de consigne de direction (19),
**caractérisé en ce que :**
il est prévu un élément de manoeuvre facultativement activable (22) dont l'activation provoque le déclenchement des fonctions suivantes :
- une commande de l'ajusteur de consigne de direction (19) mène à une rotation de l'axe (A) du pôle de direction autour d'un pôle de rotation (Q) de l'axe du pôle de direction ;
- l'axe (A) du pôle de direction est soumis à une rotation dans un sens de rotation prédéterminé autour du pôle de rotation (Q) de l'axe du pôle de direction d'un angle prédéterminé à partir d'un angle de départ quelconque.

2. Système de direction selon la revendication 1, **caractérisé en ce que** l'élément de manoeuvre facultativement activable (22) présente un élément de connexion/déconnexion pour l'activation ou la désactivation de l'une des fonctions prévues.

3. Système de direction selon la revendication 2, **caractérisé en ce que** l'élément de commutation est conçu de manière à revenir de lui-même en position de déconnexion.

4. Système de direction selon la revendication 2 ou 3, **caractérisé en ce que** l'élément de commutation comprend un élément palpeur, tracteur, basculeur, culbuteur et/ou rotatif.

5. Système de direction selon l'une quelconque des revendications 1 à 4, **caractérisé en ce que** l'ajusteur de consigne de direction (19) comprend un volant de direction (14).

6. Véhicule de transport multivoie (100), **caractérisé en ce qu**'il comprend un système de direction selon l'une quelconque des revendications 1 à 5.
